(19) Europäisches Patentamt

European Patent Office

Office européen des brevets

(11) **EP 3 524 651 B1**

(12) **EUROPÄISCHE PATENTSCHRIFT**

(45) Veröffentlichungstag und Bekanntmachung des Hinweises auf die Patenterteilung:
**26.11.2025  Patentblatt 2025/48**

(21) Anmeldenummer: **19154706.6**

(22) Anmeldetag: **31.01.2019**

(51) Internationale Patentklassifikation (IPC):
**C09D 183/10** (2006.01)

(52) Gemeinsame Patentklassifikation (CPC):
(C-Sets verfügbar)
**C09D 183/10;** C08G 77/445     (Forts.)

(54) **WÄSSRIGE POLYORGANOSILOXANHYBRIDHARZ-DISPERSION**

AQUEOUS POLYORGANOSILOXANE HYBRID RESIN DISPERSION

DISPERSION AQUEUSE DE RÉSINE POLYORGANOSILOXANHYBRIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **08.02.2018  EP 18155668**

(43) Veröffentlichungstag der Anmeldung:
**14.08.2019  Patentblatt 2019/33**

(73) Patentinhaber: **Evonik Operations GmbH**
**45128 Essen (DE)**

(72) Erfinder:
• **Seyfried, Mona**
  **45147 Essen (DE)**
• **Silber, Stefan**
  **47804 Krefeld (DE)**

• **de Gans, Berend-Jan**
  **45478 Mülheim an der Ruhr (DE)**
• **Fiedel, Michael**
  **45239 Essen (DE)**
• **Hallack, Markus**
  **46514 Schermbeck (DE)**

(74) Vertreter: **Evonik Patent Association**
**c/o Evonik Industries AG**
**IP Management**
**Postcode 84/339**
**Rodenbacher Chaussee 4**
**63457 Hanau (DE)**

(56) Entgegenhaltungen:
**CN-A- 107 573 474     DE-A1- 2 835 443**

(52) Gemeinsame Patentklassifikation (CPC): (Forts.)

C-Sets
**C09D 183/10, C08L 71/02**

**Beschreibung**

Die vorliegende Erfindung betrifft wässrige Polyorganosiloxanhybridharz-Dispersionen, deren Herstellungsverfahren und Verwendung.

Reine Silikonharze, sog. Polyorganosiloxane, sind bekannt für ihre thermische Stabilität und Witterungsstabilität. Sie werden zur Imprägnierung auf Beton, in hochtemperaturbeständigen Beschichtungen oder in wetterbeständigen Außenbeschichtungen eingesetzt. Um die Beständigkeit von Polyorganosiloxanen zu steigern, werden diese mit anderen Polymeren modifiziert. Die wechselseitige chemische Verknüpfung der Silikonharze mit diesen Polymeren findet in einer frühen Phase des Herstellverfahrens statt.

Bekannte organisch-modifizierte Polyorganosiloxanharze, im weiteren Polyorganosiloxanhybridharze genannt, sind Silikonalkydharze, Silikonpolyesterharze, Silicon-Epoxid-Hybrid Harze, Silikonpolyurethanharze und Silikonpolyacrylatharze.

Somit lassen sich die positiven Eigenschaften von reinen Silikonharzen, wie Temperaturbeständigkeit, Witterungsbeständigkeit und niedrige Oberflächenspannung, mit den positiven Eigenschaften von z.B. Polyestern, wie niedrige Thermoplastizität, hohe Elastizität und gute Pigmentbenetzung, vereinen.

Als besonders vorteilhaft erweisen sich die Eigenschaften von Silikonpolyesterharzen bei der dekorativen Beschichtung von thermisch belastbaren Haushaltsgeräten wie Toastern, Höhensonnengehäusen, Heizlüftern und Kochherden sowie der Außenbeschichtung von Friteusen, Töpfen und Pfannen. Beschichtungen von Haushaltsgegenständen müssen zudem detergentienfest sein. Das bedeutet, dass sie die heute übliche Reinigung in der Spülmaschine in Gegenwart tensidhaltiger und stark alkalischer Reinigungsmittel dauerhaft ohne Beschädigung überstehen müssen. Die Detergentienfestigkeit einer Beschichtung wird allgemein durch die Lackformulierung, insbesondere aber durch das eingesetzte Harz, bestimmt.

Auch lassen sich die Eigenschaften der Epoxidharze mit den Eigenschaften der Silikonharze vereinen. Diese Silicon-Epoxid-Hybrid Harze zeichnen sich im Vergleich zu reinen Silikonharzen durch bessere Metallhaftung und Korrosionsschutz sowie eine bessere Beständigkeit gegen Chemikalien aus. Eine typische Anwendung sind Auspuffbeschichtungen, aber auch Anstrichsysteme für keramische Substrate wie Steinzeug aller Art oder Beton. Auch werden derartige Beschichtungssysteme im Bereich der Schifffahrt, so zur Beschichtung von Schiffsrümpfen, marinen Unter- und Überseeinstallationen und Hafenanlagen eingesetzt.

Üblicherweise werden Polyorganosiloxanhybridharze in einem organischen Lösungsmittel, wie beispielsweise aromatischen Kohlenwasserstoffen, Estern, Ethern oder Ketonen, z.B. Xylol, Toluol, Solvesso und Methoxypropyl-, Ethyl- und Butylacetat, zur Verfügung gestellt. Der Vorteil lösungsmittelhaltiger Formulierungen liegt in der leichten Applizierbarkeit, der guten Verlaufseigenschaften sowie der Bildung eines Initialfilmes auf dem Substrat. Die Polyorganosiloxanhybridharzfilme können physikalisch getrocknet, reaktiv als 2 Komponentensystem gehärtet oder eingebrannt werden. Auch sind raumtemperaturhärtende Systeme bekannt.

Lösungsmittelhaltige Systeme haben jedoch toxikologische und ökologische Nachteile. Der hohe Gehalt an brennbaren und gesundheitsschädlichen Lösungsmitteln ist aus Gründen des Arbeits-, Gesundheits- und Umweltschutzes ungünstig. Zudem unterliegt der Einsatz von Lösungsmitteln zunehmend gesetzlichen Regulierungen.

Es wird daher konsequent nach lösungsmittelarmen oder gänzlich lösungsmittelfreien Systemen gesucht. Aus dem Stand der Technik sind zahlreiche Lösungsvorschläge für reine Silikonharze, sogenannte Polyorganosiloxane, beschrieben.

EP 098 940 beschreibt ein Verfahren, bei dem ein flüssiges oligomeres Siloxan mit Polyvinylalkohol oder einem Celluloseether emulgiert wird, wobei dann in dieser Emulsion die Kondensation des flüssigen Oligoorganosiloxans zu einem hochviskosen oder festen Polyorganosiloxan erfolgt. Die Nachteile dieses Verfahren bestehen in zusätzlichem technologischen Aufwand, da die Synthese des flüssigen oligomeren Siloxans eine andere Technologie als die Synthese der polymeren Organosiloxane erfordert und die Kondensation in der Emulsion nur schwer kontrollierbar ist.

DE 21 58 348 beschreibt ein Verfahren zur Herstellung von Emulsionen auf Basis hochviskoser, zu Kautschuken vernetzbarer Siloxane, bei dem eine stark verdünnte Voremulsion, die mindestens 150% Wasser und mindestens 80% Emulgator, bezogen auf das Siloxan, enthält, hergestellt wird und diese Emulsion durch Abdestillation eines Lösemittel-/Wasser-Gemisches aufkonzentriert wird. Dieses Verfahren benötigt eine vergleichsweise hohe Emulgatormenge, was bei vielen Anwendungen wegen der starken Veränderung des Anwendungstechnischen Profils unerwünscht ist und auch die Kosten erhöht. Der maximale Siloxangehalt liegt bei 45% und es verbleiben 5 bis 7% Lösemittel in der Emulsion.

DE 44 15 322 A1 beschreibt ein Verfahren zur Herstellung wässriger Silikonharzemulsionen unter Verwendung eines in einem organischen Lösemittel wie zum Beispiel Toluol gelösten, polymeren Organosiliciumverbindung, wobei nach Zugabe eines Emulgatorgemisches bestehend aus einem ethoxylierten Triglycerid und einem ethoxylierten Tridecylalkohol und Wasser zu der polymeren Organosiliciumverbindung und Erreichen einer homogenen, nicht mehr fließfähigen Mischung das organische Lösemittel als Lösemittel/Wasser-Gemisch abgetrennt wird, bevor anschließend die für das Erreichen der gewünschten Endkonzentration benötigte Wassermenge sowie gegebenenfalls bekannte Additive homogen eingearbeitet werden.

Ein Hinweis darauf, dass dieses Verfahren für andere Harze, beispielsweise Polyorganosiloxanhybridharze, als die beschriebenen Polyorganosiloxane geeignet ist, kann diese Schrift nicht entnommen werden.

CN107573474A offenbart eine wässrige Silikon-modifizierte Polyurethan- Acrylatharz Dispersion, die einen anionischen-nichtionischen Emulgator enthält.

Der vorliegenden Erfindung lag daher die Aufgabe zugrunde, eine wässrige Polyorganosiloxanhybridharz-Dispersion bereitzustellen, die in verschiedenen Beschichtungen einsetzbar ist, ohne dass die übrigen Lackeigenschaften und der Nutzwert für die jeweilige Anwendung nennenswert beeinträchtigt werden.

Überraschenderweise konnte die Aufgabe durch eine wässrige Polyorganosiloxanhybridharz-Dispersion umfassend

- mindestens ein Polyorganosiloxanhybridharz,
- mindestens ein amphiphiler Emulgator, wobei es sich bei den Emulgatoren um Blockcopolymere mit einem oder mehreren hydrophoben Einheiten und mit einem oder mehreren hydrophilen Einheiten, wobei bevorzugt die hydrophobe Einheit aus Polypropylenoxid, organisch modifiziertem Polypropylenoxid oder Polybutylenoxid besteht und die hydrophilen Einheiten aus Polyethylenoxid bestehen, handelt und
- Wasser,

gelöst werden.

Prinzipiell unterscheidet der Fachmann wässrige Polymerdispersionen in Sekundär- und Primärdispersionen. Die Sekundärdispersionen entstehen aus Polymeren, die konventionell hergestellt und dann in einem Folgeschritt aus Lösung oder Schmelze in die wässrige Dispersion überführt werden. Demgegenüber handelt es sich bei Primärdispersionen um solche, bei denen das Polymer unmittelbar in disperser Verteilung im wässrigen Dispergiermedium in Gegenwart eines Emulgators selbst erzeugt wird. Allen Herstellverfahren ist im Wesentlichen gemein, dass zum Aufbau des Polymers Monomere mitverwendet werden oder dass dieser Aufbau ausschließlich aus solchen Monomeren erfolgt.

EP 0 008 090 A1 beschreibt ein Verfahren zur Herstellung eines wassermischbaren Silikon-Polyester-Harzes, bei dem die stabile Dispersion auf die Verwendung eines "aufgesäuerten" Polyesters während der Herstellung des Silikon-Polyester-Harzes basiert. Neben dem sehr aufwendigen Verfahren besteht zudem die Gefahr der Rückspaltung des Polyesters (saure Esterhydrolyse) durch die bei diesem Verfahren erforderlichen Säurezahlen von 25 - 110.

Den Forderungen nach einer Reduktion der Lösemittelemission kann mit der erfindungsgemäßen wässrigen Polyorganosiloxanhybridharz-Dispersion Rechnung getragen werden.

Bevorzugt handelt es sich bei dem Polyorganosiloxanhybridharz um ein mit organischem Polymer-modifiziertes Polyorganosiloxan.

Besonders bevorzugt handelt es sich bei dem Polyorganosiloxanhybridharz um Umsetzungsprodukte einer Zusammensetzung enthaltend

- Komponente A) 5 bis 95 Gew.-Teile, bevorzugt 10 bis 70 Gew.-Teile eines oder mehrerer Polyorganosiloxane der allgemeinen Formel

$$R_aSi(OR')_bO_{(4-a-b/2)} \qquad \text{Formel (I)}$$

mit $0<a<2$, $0<b<2$ und $a+b<4$,

- optional Komponente B) 0 - 20 Gew.-Teile, bevorzugt 1 -10 Gew.-Teile eines oder mehrerer linearer und/oder verzweigter Polyorganosiloxane der Formel

$$R''O\text{-}[R'''_2Si\text{-}O]_n\text{-} \qquad \text{Formel (II)}$$

- Komponente C) 5 bis 95 Gew.-Teile, bevorzugt 30 bis 90 Gew.-Teile eines organischen Polymers,

wobei
$R_a$, R', R" und R''' jeweils unabhängig voneinander für einen Alkylrest mit 1 bis 8 C-Atomen oder einen aromatischen Rest mit 6 bis 20 C-Atomen steht und n für eine Zahl im Bereich von 4 bis 250 steht.

Die Polyorganosiloxanhybridharze können in bekannter Weise hergestellt werden. Übliche Verfahren sind aus der DE 10 2013 218976 A1, DE 10 2013 218981A1, US 3,154,597 oder US 3,170,962 zu entnehmen. Dem Fachmann sind weitere Literatur, wie z.B. "Silicone resins and their combination" von Wernfried Heilen, Kapitel 2.2 Silicone combination resins/silicone resin hybrids, 2015 oder "High Silicones and Silicone-Modified Materials strength Silicone-Urethane Copolymers: Synthesis and Properties, Chapter 26, pp 395-407, bekannt.

Dabei wird beispielsweise entweder ein Polyorganosiloxan mit einem Hydroxygruppenhaltigen organischen Polymer umgesetzt oder das organische Polymer in Anwesenheit des Polyorganosiloxans durch geeignete Monomere oder ein organisches Polymer mit Alkoxysilan-Funktionalität durch Hydrolyse/Kondensation bzw. Equilibrierung mit Alkoxysilanmonomeren bzw. Siloxanoligomeren hergestellt.

Bevorzugt handelt es sich bei dem Polyorganosiloxan um ein lineares, einfach oder mehrfach verzweigtes Si-OH- oder $SiOR^3$- funktionelles Polyorganosiloxan.

Polyorganosiloxane werden in der Literatur auch als Siloxan-Oligomere, Alkoxyfunktionelle Methyl-, Phenyl- und Methyl-/Phenyl-Siloxane, Hydroxyfunktionelle Methyl-, Phenyl- und Methyl-/Phenyl- Silikonharze oder Silanole bezeichnet.

Alkoxyfunktionelle Methyl-, Phenyl- aber auch Methyl-/Phenyl- Siloxan-Oligomere sind im Hause Fa. ShinEtsu erhältlich, mit den Handelsnamen KC-89S, KR-500, X 40-9225, X 40-9246, X 40-9250, KR-401N, X-40-9227, KR-510, KR-9218, KR-213.

Methoxyfunktionelle Methyl-, Phenyl- und Methyl-/Phenyl-Siloxane sind erhältlich von Dow Corning unter den Handelsnamen Dow Corning® US-CF 2403 Resin, US-CF 2405 Resin, 3037 Intermediate, 3074 Intermediate, RSN-5314 Intermediat. Silanolfunktionelle Methyl-/Phenylharze werden unter dem Handelsnamen RSN-0409 HS Resin, RSN-0431 HS Resin, RSN-0804 Resin, RSN-0805 Resin, RSN-0806 Resin, RSN-0808 Resin, RSN-0840 Resin vertrieben.

Alkoxyfunktionelle Methyl-/Phenyl-, Phenyl- und Methyl- Silikonharze, die auch zum entsprechenden Silanol hydrolysiert angeboten werden, finden sich unter dem Handelsnamen SILRES® von der Fa. Wacker Chemie im Handel, wie etwa mit der Zusatzbezeichnung REN 50, REN 60, REN 80, KX, HK 46, MSE 100 oder SY 300, IC 836, REN 168, SY 409, IC 232, SY 231, IC 368, IC 678.

Die Herstellung von derartigen Silikonharzen ist der Literatur lange bekannt (siehe hierzu in W. Noll - Chemie und Technologie der Silicone, Wiley-VCH Verlag GmbH & Co. KGaA, Weinheim, 1960) und wird auch in der deutschen Patentschrift DE 34 12 648 beschrieben.

Vorzugsweise handelt es sich bei dem organischen Polymer um Polyepoxide, Polyester, Polyacrylate und/oder -methacrylate sowie Copolymere daraus, Polyurethane, Cellulosederivate, Polysulphone, Polyethersulphone, Polyphenylensulfide und -oxide, Polyamide, Polyamidimid, Polyimide, Polyether, aromatische und aliphatische glycidylfunktionelle Polymere, Oligomere, Phenoxyharze, Polycarbonate, Keton-Formaldehyharze, Polyvinylharze, ausgewählt aus Polyvinylalkohol, Polyglycerine, Polyvinylacetat,deren (Teil-) Hydrolysate und Derivate, Phenolharze, Fluorpolymere, Alkydharze und Mischungen daraus.

Die verschiedenen Fragmente der in der Formel (I) bzw. Formel (II) angegebenen Siloxanketten können statistisch verteilt sein. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden.

Die hier wiedergegebenen Indexzahlen und die Wertbereiche der angegebenen Indizes können als Mittelwerte der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (I).

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Bei Prozentangaben handelt es sich, wenn nicht anders angegeben, um Angaben in Gewichtsprozent.

Sind nachfolgend Messwerte angegeben, so sind diese Messungen, wenn nicht anders angegeben, bei Normalbedingungen (25 °C und 1013 mbar) durchgeführt worden.

Werden nachfolgend Mittelwerte angegeben, so handelt es sich, wenn nicht anderes angegeben, um Gewichtsmittel.

Vorzugsweise ist das organische Polymer ausgewählt aus der Gruppe der Polyepoxide, Polyester, Polyacrylate und -methacrylate, Polyurethane, Cellulosederivate, Polysulfone, Polyethersulfone, Polyphenylensulfide und -oxide, Polyamide, Polyamidimide, Polyimide, Polyether, aromatische und aliphatische glycidylfunktionelle Polymere und Oligomere, Phenoxyharze, Polycarbonate, Keton-formaldehydharze, Polyvinylharze, ausgewählt aus Polyvinylalkohole, Polyvinylacetate und deren Derivate, Phenolharze, Fluorpolymere, Alkydharze, Cumaron/inden-Harze und Mischungen daraus.

Besonders bevorzugt enthält das organische Polymer Hydroxylgruppen und/oder acide Wasserstoffe.

Es wurde überraschend gefunden, dass sich polymere, amphiphile Emulgatoren besonders gut zur Stabilisierung einer wässrigen Polyorganosiloxanhybridharz Dispersion eignen und keine negative Auswirkung auf den Lacküberzug aufweisen.

Bevorzugt für die erfindungsgemäße Polyorganosiloxanhybridharz-Dispersion ist ein Emulgator, der ausgewählt ist aus

- Triblockcopolymeren mit einem Mittelblock aus Polypropylenoxid und zwei endständigen Blöcken aus Polyethylenoxid der allgemeinen Formel (a) $HO(C_2H_4O)_x(C_3H_6O)_y(C_2H_4O)_xH$,
- Triblockcopolymeren mit einem Mittelblock aus Polybutylenoxid und zwei endständigen Blöcken aus Polyethylenoxid der allgemeinen Formel (b) $HO(C_2H_4O)_x(C_4H_8O)_y(C_2H_4O)_xH$,
- Triblockcopolymeren mit einem Mittelblock aus Polyethylenoxid und zwei endständigen Blöcken aus Polypropylenoxid der allgemeinen Formel (c) $HO(C_3H_6O)_x(C_2H_4O)_y(C_3H_6O)_xH$,
- Diblockcopolymere mit einem Block aus Polypropylenoxid und einem Block aus Polyethylenoxid der allgemeinen Formel (d1) $RO(C_3H_6O)_y(C_2H_4O)_xH$ oder der allgemeinen Formel (d2) $RO(C_2H_4O)-(C_3H_6O)_yH$, mit R einen organischen Rest der allgemeinen Formel $C_mH_{2m+1}$ mit $1 \leq m \leq 22$, und
- Multiblockcopolymeren mit vier mittleren Blöcken aus Polypropylenoxid und vier endständigen Blöcken aus Polyethylenoxid der allgemeinen Formel (e) $[HO(C_2H_4O)(C_3H_6O)_y]_2NC_2H_4N[(C_3H_6O)_y(C_2H_4O)_x]_2H$,
- oder Mischungen daraus.

x und y sind ganze Zahlen und stellen die Anzahl der jeweiligen Monomereinheiten dar. Die allgemeinen Formeln (a) bis (e) dienen der Veranschaulichung.

Derartige Emulgatoren sind beispielsweise unter der Bezeichnung Pluronic, Kolliphor oder Lutrol (Fa. BASF), Genapol PF (Fa. Clariant), Imbentin-PAP (Fa. Kolb), Synperonic PE (Fa. Croda), ADEKA NOL (Fa. Adeka), Emulgen PP (Fa. Kao), Teric PE, Empilan P oder Surfonic POA-L (Fa. Huntsman), Newpol PE (Fa. Sanyo), auch bekannt unter der Bezeichnung Poloxamere, Vorasurf 504 (Fa. DOW), Pluronic RPE (Fa. BASF), Surfonic POA (Fa. Huntsman), Tergitol X (Fa. DOW) Genapol ED (Fa. Clariant) und Synperonic T (Fa. Croda) erhältlich.

Besonderes bevorzugt handelt es sich bei den polymeren, amphiphilen Emulgatoren um Triblockcopolymeren mit einem Mittelblock aus Polypropylenoxid und zwei endständigen Blöcken aus Polyethylenoxid gemäß der Veranschaulichung nach der allgemeinen Formel (a) oder Gemische daraus.

Bevorzugt weisen die erfindungsgemäßen Emulgatoren oder Gemische daraus einen HLB-Wert von 9 bis 19, besonderes bevorzugt einen HLB-Wert von 11 bis 17, auf.

Der HLB-Wert (hydrophilic-lipophilic balance) wird gemäß Formel (III):

$$HLB = 20 \times \frac{M_{hydro}}{M_{tot}} \qquad\qquad \text{Formel (III)}$$

ermittelt,

mit $M_{hydro}$ = Masse der bei der Herstellung der Triblockcopolymeren für die hydrophilen Blöcken eingesetzten Monomeren und
$M_{tot}$ = gesamte Monomermasse.

Der HLB-Wert kann auch für Gemische von Triblockcopolymeren gemäß Formel (IV) errechnet werden:

$$HLB = \frac{1}{M}\sum_{i=1}^{N} M_i HLB_i \qquad\qquad \text{Formel (IV)}$$

mit

$M_i$ =      Masse des jeweiligen Triblockcopolymers,
$M$ =      gesamte Masse an Triblockcopolymeren und
$HLB_i$ =      HLB-Wert des jeweiligen Triblockcopolymers.

Die amphiphilen, polymeren Emulgatoren haben in der Regel eine mehr oder weniger breite Molekulargewichtsverteilung. Bevorzugt weisen die erfindungsgemäßen Emulgatoren oder Gemische daraus ein mittleres Molekulargewicht $Mw > 1,000$ g/mol und besonderes bevorzugt $Mw > 1,700$ g/mol auf.

Vorzugsweise hat der Emulgator oder das Emulgatorsystem in wässriger Lösung eine Leitfähigkeit, gemessen nach DIN 53779, von 10 - 25.000 $\mu S.cm^{-1}$, bevorzugt 50 - 5.000 $\mu S.cm^{-1}$ und besonderes bevorzugt 200 - 2.500 $\mu S.cm^{-1}$.

Es ist auch vorstellbar, die erfindungsgemäßen Emulgatoren mit anderen Emulgatoren, wie beispielsweise mit anionischen, kationischen oder nichtionogenen Emulgatoren, zusammen einzusetzen.

Im Sinne dieser Anmeldung werden Gemische von Triblockcopolymeren als Emulgatorensysteme verstanden, wobei weitere andere Emulgatoren zugesetzt werden können. Emulgatoren und Emulgatorsysteme werden als Synonyme verwendet.

Bevorzugt liegt der Restlösungsmittelgehalt bei < 5,0 Gew.-%, bevorzugt < 2,5 Gew-%, besonders bevorzugt < 1,0 Gew.-%, bezogen auf die Polyorganosiloxanhybridharz-Dispersion.

Falls erforderlich weist die Polyorganosiloxanhybridharz-Dispersion vorzugsweise weitere Zusatzstoffe auf, die ausgewählt aus Entschäumern, Entlüftern, Rheologieadditiven, Konservierungsstoffen, Substratnetzmitteln, Vernetzern, Trocknungshilfen, Katalysatoren, Antioxidantien, Hautverhinderungsmitteln, Anti-Absatzmitteln, Verdickern, Koaleszenzmitteln, Filmbildehilfsmitteln, Füllstoffen, Pigmenten und/oder Dispergiermitteln sind.

Vorzugsweise handelt es sich bei den Pigmenten um organische, anorganische Pigmente oder Rußpigmente. Als anorganische Pigmente können beispielsweise Eisenoxide, Chromoxide oder Titanoxide genannt werden. Geeignete organische Pigmente sind beispielsweise Azopigmente, Metallkomplex-Pigmente, anthrachinoide Pigmente, Phthalocyaninpigmente, polycyclische Pigmente, insbesondere solche der Thioindigo-, Chinacridon-, Dioxazin-, Pyrrolopyrrol-, Napthalenetetracarbonsäure-, Perylen-, Isoamidolin(on)-, Flavanthron-, Pyranthron- oder Isoviolanthron-Reihe. Als Ruße können Gasruße, Flammruße oder Furnaceruße eingesetzt werden. Diese Ruße können zusätzlich nachoxidiert und/oder verperlt sein.

Optional können weitere Zusatzstoffe zugesetzt werden. Als Zusatzstoff gilt dabei jegliche Komponente, die die Eigenschaften der erfindungsgemäßen Dispersion positiv beeinflusst. Es können unabhängig voneinander ein oder mehrere Zusatzstoffe zugesetzt werden. Im Weiteren werden einige Zusatzstoffe aufgeführt, die für die erfindungsgemäße Dispersion verwendet werden können. Die Aufzählung ist nicht abschließend: Als Zusatzstoffe sind insbesondere Netz- und Dispergieradditive vorteilhaft einsetzbar. Im Markt ist eine Vielzahl von Netz- und Dispergieradditiven erhältlich, die für die erfindungsgemäßen Dispersionen verwendet werden können. Als geeignete chemische Basis können beispielsweise Styrol-Maleinsäureanhydrid Copolymere, Acrylate, Polyether, z.B. Styroloxidpolyether, Polyester, Aminopolyester, Polyurethane und Aminopolyether genannt werden. Dabei können die Additive unterschiedliche Topologien aufweisen, beispielsweise linear, verzweigt, kammartig oder sternförmig. Üblicherweise weisen Netz- und Dispergieradditive eine heterogene Struktur auf, die sich in eine Haftgruppe und eine stabilisierende Seitenkette aufteilt.

Neben Pigmenten können auch Füllstoffe in den erfindungsgemäßen Dispersionen eingesetzt werden. Geeignete Füllstoffe sind beispielsweise solche auf Basis von Kaolin, Talkum, Glimmer, anderen Silikaten, Quarz, Christobalit, Wollastonit, Perlite, Diatomeenerde, Faserfüllstoffe, Alumiumhydroxid, Bariumsulfat, Glas oder Calciumcarbonat.

Die Verwendung eines Entschäumers oder Entlüfters kann vorteilhaft sein, um in Verarbeitungs- bzw. Herstellungsprozessen die eingetragene Luftmenge aktiv zu reduzieren. Genannt seien beispielsweise solche auf Mineral- oder Pflanzenölbasis oder auf Basis von Polyethersiloxanen, teilweise gefüllt mit partikulären Komponenten wie zum Beispiel Silica.

Als weitere Zusatzstoffe können beispielsweise Bindemittel, Farbstoffe, Oberflächenadditive, Compatibilizer, UV Stabilisatoren und Konservierungsmittel genannt werden.

Vorzugsweise werden als Konservierungsstoffe Fungizide, Bakterizide, Pestizide, Algizide und/oder Herbizide verwendet.

Bevorzugt liegt der mittlere, volumengewichtete Durchmesser der Polyorganosiloxanhybridharzpartikeln zwischen 0,1 - 10,0 $\mu$m, vorzugsweise zwischen 0,1 - 2,0 $\mu$m, bevorzugt zwischen 0,2 - 1,0 $\mu$m und besonders bevorzugt zwischen 0,2 - 0,7 $\mu$m, gemessen nach ISO 13320:2009. Für die vorliegende Erfindung wurde der mittlere, volumengewichtete Durchmesser der Partikeln mit Hilfe eines Coulter LS 13320-Instruments der Fa. Beckman Coulter, bestimmt.

Vorzugsweise weist die Polyorganosiloxanhybridharz-Dispersion einen Festkörpergehalt von 30,0 Gew.-% - 70,0 Gew.-%, bevorzugt 45,0 Gew.-% - 55,0 Gew.-%, bezogen auf die Dispersion auf.

Ein weiterer Gegenstand der Erfindung ist ein Verfahren zur Herstellung wässriger Polyorganosiloxanhybridharz-Dispersion umfassend die Schritte

- Emulgieren einer Polyorganosiloxanhybridharz-Lösung enthaltend ein organisches Lösungsmittel mit mindestens einem Emulgator oder einem Emulgatorsystem,
- Zugabe von Wasser,
- Abtrennung des Lösungsmittels.

Vorzugsweise wird eine wässrige Emulgatorlösung oder eine wässrige Emulgatorsystemlösung eingesetzt, wobei deren Leitfähigkeit, gemessen nach DIN 53779, 10 - 25.000 $\mu$S.cm$^{-1}$, bevorzugt 50 - 5.000 $\mu$S.cm$^{-1}$ und besonderes bevorzugt 200 - 2.500 $\mu$S.cm$^{-1}$ beträgt.

Es konnte beobachtet werden, dass die Leitfähigkeit auch zur Stabilität der emulgierten Polyorganosiloxanhybridharz-Lösung enthaltend ein organisches Lösungsmittel in Wasser mit mindestens einem Emulgator oder einem Emulgatorsystem beiträgt.

Vorteilhafterweise kann die Leitfähigkeit der wässrigen Emulgatorlösung oder der wässrigen Emulgatorsystemlösung eingestellt werden.

Zur Einstellung der Leitfähigkeit eignen sich wasserlösliche Salze. Bevorzugt werden dabei Salze verwendet, die Fluorid, Chlorid, Sulfat, Hydrogensulfat, Thiosulfat, Sulfit, Phosphat, Hydrogenphosphat, Dihydrogenphosphat, Carbonat, Hydrogencarbonat, Hydroxid, Nitrat, Acetat, Lactat, Formiat, Propionat, Citrat, Fumarat, Malat, Malonat, Oxalat, Pyruvat, Benzoat, oder Tartrat als Anion oder Gemische daraus enthalten. Besonderes bevorzugt sind Acetat, Dihydrogenphosphat, Hydrogenphosphat oder Hydroxid als Anion und ganz besonderes bevorzugt dessen Ammonium, Kalium und Natrium-Salze.

Die Leitfähigkeit wird vorzugsweise mit Hilfe eines Spektrometers bestimmt. Ein im Markt erhältlicher Spektrometer ist z.B. das Messgerät DT 1200 der Fa. Dispersion Technology.

Vorzugsweise handelt es sich bei den Emulgatoren um Blockcopolymere mit einem oder mehreren hydrophoben Einheiten und einem oder mehreren hydrophilen Einheiten, wobei bevorzugt die hydrophobe Einheit aus Polypropylenoxid, organisch modifiziertem Polypropylenoxid oder Polybutylenoxid, und die hydrophile Einheit aus Polyethylenoxid besteht.

Bevorzugt für das erfindungsgemäße Verfahren ist ein Emulgator, der ausgewählt ist aus

- Triblockcopolymeren mit einem Mittelblock aus Polypropylenoxid und zwei endständigen Blöcken aus Polyethylenoxid der allgemeinen Formel (a) $HO(C_2H_4O)_x(C_3H_6O)_y(C_2H_4O)_xH$,
- Triblockcopolymeren mit einem Mittelblock aus Polybutylenoxid und zwei endständigen Blöcken aus Polyethylenoxid der allgemeinen Formel (b) $HO(C_2H_4O)_x(C_4H_8O)_y(C_2H_4O)_xH$,
- Triblockcopolymeren mit einem Mittelblock aus Polyethylenoxid und zwei endständigen Blöcken aus Polypropylenoxid der allgemeinen Formel (c) $HO(C_3H_eO) \times (C_2H_4O)_y(C_3H_eO)_xH$,
- Diblockcopolymere mit einem Block aus Polypropylenoxid und einem Block aus Polyethylenoxid der allgemeinen Formel (d1) $RO(C_3H_6O)_y(C_2H_4O)_xH$ oder der allgemeinen Formel (d2) $RO(C_2H_4O)_x(C_3H_6O)_yH$, mit R einen organischen Rest der allgemeinen Formel $C_mH_{2m+1}$ mit $1 \le m \le 22$, und
- Multiblockcopolymeren mit vier mittleren Blöcken aus Polypropylenoxid und vier endständigen Blöcken aus Polyethylenoxid der allgemeinen Formel (e) $[HO(C_2H_4O)(C_3H_6O)_y]_2NC_2H_4N[(C_3H_6O)_y(C_2H_4O)_x]_2H$,
- oder Mischungen daraus.

X und y sind ganze Zahlen und stellen die Anzahl der jeweiligen Monomereinheiten dar. Die allgemeinen Formeln (a) bis (e) dienen der Veranschaulichung.

Derartige Emulgatoren sind beispielsweise unter der Bezeichnung Pluronic, Kolliphor oder Lutrol (Fa. BASF), Genapol PF (Fa. Clariant), Imbentin-PAP (Fa. Kolb), Synperonic PE (Fa. Croda), ADEKA NOL (Fa. Adeka), Emulgen PP (Fa. Kao), Teric PE, Empilan P oder Surfonic POA-L (Fa. Huntsman), Newpol PE (Fa. Sanyo), auch bekannt unter der Bezeichnung Poloxamere, Vorasurf 504 (Fa. DOW), Pluronic RPE (Fa. BASF), Surfonic POA (Fa. Huntsman), Tergitol X (Fa. DOW) Genapol ED (Fa. Clariant) und Synperonic T (Fa. Croda) erhältlich.

Besonderes bevorzugt handelt es sich bei den polymeren, amphiphilen Emulgatoren um Triblockcopolymeren mit einem Mittelblock aus Polypropylenoxid und zwei endständigen Blöcken aus Polyethylenoxid gemäß der allgemeinen Formel (a) zur Veranschaulichung oder Gemische daraus.

Bevorzugt weisen die Emulgatoren oder Gemische daraus einen HLB-Wert von 9 bis 19, besonderes bevorzugt einen HLB-Wert von 11 bis 17, auf.

Der HLB-Wert (hydrophilic-lipophilic balance) wird gemäß Formel (III):

$$HLB = 20 \times \frac{M_{hydro}}{M_{tot}} \qquad \text{Formel (III)}$$

ermittelt, mit $M_{hydro}$ = Masse der bei der Herstellung der Triblockcopolymeren für die hydrophilen Blöcken eingesetzten Monomeren und $M_{tot}$ = gesamte Monomermasse.

Der HLB-Wert kann auch für Gemische von Triblockcopolymeren gemäß Formel (IV) errechnet werden:

$$HLB = \frac{1}{M} \sum_{i=1}^{N} M_i HLB_i \qquad \text{Formel (IV)}$$

mit

$M_i$ =    Masse des jeweiligen Triblockcopolymers,
$M$ =    gesamte Masse an Triblockcopolymeren und
$HLB_i$ =    HLB-Wert des jeweiligen Triblockcopolymers.

Die amphiphilen, polymeren Emulgatoren haben in der Regel eine mehr oder weniger breite Molekulargewichtsverteilung. Bevorzugt weisen die erfindungsgemäßen Emulgatoren oder Gemische daraus ein mittleres Molekulargewicht Mw > 1,000 g/mol und besonderes bevorzugt Mw > 1,700 g/mol auf.

Bevorzugt handelt es sich bei dem eingesetzten Polyorganosiloxanhybridharz um Umsetzungsprodukte einer Zusammensetzung enthaltend

- Komponente A) 5 bis 95 Gew.-Teile, , bevorzugt 10 bis 70 Gew.-Teile eines oder mehrerer Polyorganosiloxane der allgemeinen Formel

$$RaSi(OR')_bO_{(4-a-b/2)} \qquad \text{Formel (I)}$$

mit 0<a<2, 0<b<2 und a+b<4,

- optional Komponente B) 0 - 20 Gew.-Teile, bevorzugt 1 -10 Gew.-Teile eines oder mehrerer linearer und/oder verzweigter Polyorganosiloxane der Formel

$$R"O-[R'''_2Si-O]_n- \qquad \text{Formel (II)}$$

- Komponente C) 5 bis 95 Gew.-Teile, bevorzugt 30 bis 90 Gew.-Teile eines organischen Polymers,

wobei

$R_a$, R', R" und R''' jeweils unabhängig voneinander für einen Alkylrest mit 1 bis 8 C-Atomen oder einen aromatischen Rest mit 6 bis 20 C-Atomen steht und n für eine Zahl im Bereich von 4 bis 250 steht.

Bevorzugt handelt es sich bei dem Polyorganosiloxan um ein lineares, einfach oder mehrfach verzweigtes Si-OH- oder SiOR$^3$- funktionelles Polyorganosiloxan. Im Markt erhältliche Polyorganosiloxane sind oben beschrieben.

Vorzugsweise handelt es sich bei dem organischen Polymer um Polyepoxide, Polyester, Polyacrylate und/oder -methacrylate sowie Copolymere daraus, Polyurethane, Cellulosederivate, Polysulphone, Polyethersulphone, Polyphenylensulfide und -oxide, Polyamide, Polyamidimid, Polyimide, Polyether, aromatische und aliphatische glycidylfunktionelle Polymere, Oligomere, Phenoxyharze, Polycarbonate, Keton-Formaldehyharze, Polyvinylharze, ausgewählt aus Polyvinylalkohol, Polyglycerine, Polyvinylacetat,deren (Teil-) Hydrolysate und Derivate, Phenolharze, Fluorpolymere, Alkydharze und Mischungen daraus.

Besonders bevorzugt handelt es sich bei dem organischen Polymer um Hydroxylgruppen enthaltenden organischen Polymere, vorzugsweise ausgewählt aus der Gruppe der Polyepoxide, Polyester, Polyacrylate, Polymethacrylate, Polyurethane und Cellulosederivate.

Bevorzugt handelt es sich bei dem Emulgatorsystem um Blockcopolymere mit einem oder mehreren hydrophoben Blöcke und mit einem oder mehreren hydrophilen Blöcke, wobei vorzugsweise der hydrophobe Block aus Polypropylenoxid, organisch modifiziertem Polypropylenoxid oder Polybutylenoxid und der hydrophile Block aus Polyethylenoxid bestehen.

Vorzugsweise handelt es sich bei dem Lösemittel um ein organisches Lösungsmittel oder Mischungen davon, das bei der Herstellung des Polyorganosiloxanhybridharzes eingesetzt wurde. Bevorzugt wird ein organisches Lösungsmittel aus der Reihe der Ketone, ausgewählt aus Methylethylketon, Aceton, Methylisobutylketon, Diethylketon, Methylpropylketon oder Cyclohexanon, Methylcyclohexanon, Ester, ausgewählt aus Ethylacetat, Butylacetat, Ethylpropionat oder Isobutylacetat, tert-Butylacetat, Carbonate, beispielsweise Dialkylcarbonate oder cyclische Carbonate wie Ethylen-Propylen- oder Glycerincarbonat, aromatische Kohlenwasserstoffe, beispielsweise Xylol, zyklische Kohlenwasserstoffe, beispielsweise Cyclohexan, Ether beispielsweise Dibutylether, Esterether beispielsweise Methoxypropylacetat eingesetzt. Es ist vorstellbar, andere dem Fachmann bekannte Lösungsmittel einzusetzen oder Mischungen verschiedener Lösungsmittel.

Besonders bevorzugt weist das organische Lösungsmittel oder Mischungen davon einen Siedepunktsbereich von 50°C - 150°C, bevorzugt 90°C - 120°C auf.

Vorzugsweise erfolgt die Abtrennung des Lösungsmittels mittels Destillation bei vermindertem Druck mit oder ohne Strippinggas, Wasserdampfdestillation, mittels eines Membranverfahrens oder eines Dünnschichtverdampfers.

Vorzugsweise weist die Polyorganosiloxanhybridharz-Lösung eine Polyorganosiloxanhybridharz-Konzentration von 40,0 Gew.-% - 95,0 Gew.-%, bevorzugt 60,0 Gew.-% - 70,0 Gew.-%, bezogen auf die Polyorganosiloxanhybridharz-Lösung, auf.

Vorzugsweise beträgt das Massenverhältnis der Polyorganosiloxanhybridharz-Lösung zur wässrigen Emulgatorlösung oder Emulgatorsystemlösung > 2:1, bevorzugt 3:1 bis 10:1, besonders bevorzugt 4:1 bis 8:1.

Die Verwendung der erfindungsgemäßen Polyorganosiloxanhybridharz-Dispersion in Beschichtungsstoffen, sowie Lacken und Farben, Substratbeschichtungen, Klebstoffen, struktureller Klebstoff, Compoundierungsmatrizes und Schlichten ist ebenfalls ein Gegenstand der Erfindung. Weitere Anwendungsbereiche sind in der Herstellung von Drucktinten oder 3D-Druck-Materialien.

Erfindungsgemäße Substrate, insbesondere Backbleche, Backformen, Pfannen, Metalltöpfe und dergleichen, beschichtet mit einer Zusammensetzung enthaltend einer erfindungsgemäßen Polyorganosiloxanhybridharz-Dispersion sind ebenso mitumfasst. Substrate sind vorzugsweise keramische, polymere oder metallische Untergründe.

Die erfindungsgemäßen Gegenstände werden nachfolgend beispielhaft beschrieben, ohne dass die Erfindung auf diese beispielhaften Ausführungsformen beschränkt sein soll.

**Methoden:**

Messung der Leitfähigkeit

Die Leitfähigkeit der wässrigen Emulgatorlösungen wurde nach DIN 53779 bestimmt. Es wurde ein DT1200 Messgerät der Fa. Dispersion Technology verwendet. Der Leitfähigkeit-Wert ist der Mittelwert einer Dreifachmessung.

Messung der Teilchengröße

Die Bestimmung der Teilchengröße der Dispersionen erfolgt gemäß ISO 13320:2009. Es wurde ein LS13320 Instrument der Firma Beckman-Coulter verwendet. Die Teilchengröße wurde berechnet unter Annahme eines Brechungsindexes $n_d$ = 1,51. Der berechnete mittlere Teilchendurchmesser ist volumengewichtet.

Bestimmung des Festkörpers:

Die Bestimmung des Gehalts an nichtflüchtigen Anteilen erfolgt gemäß DIN EN ISO 3251:2008, wobei im Rahmen der vorliegenden Erfindung für die Bestimmung des Festkörpers die Prüfung der Polyorganosiloxane sowie der Polyorganosiloxanhybridharz-Lösungen 60 Minuten bei 180°C und für die Dispersion 60 Minuten bei 105°C durchgeführt werden.

Viskositätsbestimmung

Die Bestimmung der Viskositäten erfolgte mittels eines Spindelviskosimeter Typ Brookfield LV-DV-I+. Brookfield-Viskosimeter sind Rotationsviskosimeter mit definierten Spindelsätzen als Rotationskörper. Bei den verwendeten Rotationskörpern handelte es sich um einen LV-Spindelsatz. Aufgrund der Temperaturanhängigkeit der Viskosität wurde die Temperaturen von Viskosimeter und Messflüssigkeit während der Messung auf +/-0,5 °C genau konstant gehalten. Weitere verwendete Materialien neben dem LV-Spindelsatz waren ein thermostatisierbares Wasserbad, ein Thermometer 0-100 °C (Skalenteile 1 °C bzw. kleiner) und ein Zeitmessgerät (Skalenwerte nicht größer als 0,1 Sekunden). Zur Messung wurden 100 ml der Probe in eine Weithalsflasche gefüllt; temperiert und luftblasenfrei vermessen, nachdem eine vorherige Kalibrierung erfolgt war. Zur Bestimmung der Viskosität wurde das Viskosimeter so zur Probe positioniert, so dass die Spindel bis zur Markierung im Produkt eintaucht. Die Messung wird mit Hilfe der Starttaste ausgelöst, wobei darauf geachtet wurde, dass die Messung im günstigen Messbereich von 50 % (+/-20 %) des maximal messbaren Drehmoments erfolgte. Das Ergebnis der Messung wurde am Display des Viskosimeters in mPas ausgegeben, wobei die Division durch die Dichte (g/ml) die Viskosität in mm2/s liefert.

Restlösungsmittelgehalt

Die Bestimmung des Gehalts an Restlösungsmittel wurde in Anlehnung an die European Pharmacopoeia 5.4 Residual solvents durchgeführt.

Pendelhärte nach König

Bei der Pendelhärte Bestimmung nach König (DIN 53157 oder EN ISO 1522) dient die Dämpfung eines schwingenden Pendels als Maß. Das Pendel mit zwei Edelstahlkugeln wird auf einen Lackfilm gesetzt. Es besteht eine physikalische Beziehung zwischen Dauer der Pendelschwingung, Amplitude und den geometrischen Abmessungen des Pendels. Das viskoelastische Verhalten der Beschichtung ist ausschlaggebend für die Härte. Wird das Pendel in Schwingung versetzt, rollen die Kugeln auf der Oberfläche und üben somit Druck auf sie aus. Die mehr oder weniger starke Rückfederung hängt von der Elastizität ab. Das Fehlen elastischer Kräfte verursacht eine starke Dämpfung der Pendelbewegung. Hohe elastische Kräfte dagegen verursachen nur eine geringe Dämpfung. Pendelhärte nach "König": Schwingungsanzahl in osc.

1 Oszillation = 1,4 Sekunden

Weitere Bedingungen

Werden im Rahmen der vorliegenden Erfindung %-Angaben gemacht, so handelt es sich, wenn nicht anderes angegeben, um Angaben in Gewichts-%. Bei Zusammensetzungen beziehen sich die %-Angaben, wenn nicht anderes angegeben, auf die Gesamtzusammensetzung. Werden in den nachfolgenden Beispielen Mittelwerte angegeben, so handelt es sich, wenn nicht anderes angegeben, um Zahlenmittel. Werden nachfolgend Messwerte angegeben, so wurden diese Messwerte, wenn nicht anderes angegeben, bei einem Druck von 101325 Pa, einer Temperatur von 23 °C und der umgebenden relativen Luftfeuchtigkeit von ca. 40 % ermittelt.

**Materialien und Geräte:**

- Glasplatten, Fa. Gläserei Glänzer, Maße: 90 x 150 x 5mm
- PVC - Platten, Mat.Nr:4364002858, Fa. KVG Kunststoff Betriebs GmbH
- 300$\mu$m - Kastenrakel, Fa. Simex
- 300$\mu$m - Würfelrakel, Fa. TQC GmbH,
- Dispermat, Fa. VMA Getzmann mit Teflon-Scheibe
- Weithals - Glasflaschen
- Pluronic® F 127 / Poloxamer 407, Fa. BASF
- Synperonic® PE F 108 / Poloxamer 338, Fa. Croda
- Tergitol® 15-S-15, Fa. DOW Chemical
- Tergitol® 15-S-7, Fa. DOW Chemical
- Tergitol® 15-S-5, Fa. Dow Chemical
- Tagat® R200, Fa. Evonik Industries
- TEGO® Alkanol TD12, Fa. Evonik Industries
- TEGO® Alkanol TD6, Fa. Evonik Industries
- Silikopon® EW, Fa. Evonik Industries

**Beispiele**

**Herstellung** von **erfindungsgemäßen wässrigen Polyorganosiloxanhybrid-Dispersionen**

Für die Herstellung der erfindungsgemäßen wässrigen Polyorganosiloxanhybrid-Dispersion wird zunächst eine lösungsmittelbasierte Polyorganosiloxanhybrid-Lösung hergestellt. Das Lösungsmittel wird anschließend mit dem erfindungsgemäßen Verfahren entfernt.
1. Herstellung einer lösungsmittelbasierten Polyorganosiloxanhybrid-Lösung mit Polyester, (zur Vereinfachung wird im Weiteren als Silikon-Polyesterhybridlösung genannt)
1.1 Herstellung eines Polyorganosiloxans als Komponente A

Verwendete Lösungsmittel: Methylisobutylketon (MIBK), Diethylcarbonat (DEC), Methylpropylketon (MPK), Ethylacetat (EtAc), Isobutylacetat (iBuAc), Ethylisobutyrat (EtiBu)
Zunächst wurden drei Polyorganosiloxane POS 1, POS 2 und POS 3 gemäß EP 0 157 318 mit nachfolgenden Parametern aus Tabelle 1 hergestellt.
POS 4 ist ein kommerziell erhältliches Polyorganosiloxan der Fa. Dow Corning.

**Tabelle 1:**

| Bezeehnung | Chemische Bezeichnung | Alkoxygehalt [%] | Viskosität [mPas] | Lösungs mittel | Festkörper [%] |
|---|---|---|---|---|---|
| POS 1 | methoxypolysiloxan | 14,7 | 1760 | - | 95,7 |
| POS 2 | Phenylmethoxy polysiloxan | 17,4 | 4470 | - | 98,4 |
| POS 3 | Phenylmethylethoxypolysiloxan | 15,1 | 450 | MIBK | 90,2 |

(fortgesetzt)

| Bezeehnung | Chemische Bezeichnung | Alkoxygehalt [%] | Viskosität [mPas] | Lösungs mittel | Festkörper [%] |
|---|---|---|---|---|---|
| POS 4 | Dow Corning ® 3074 | 16,8 | 184 | - | 88,4 |

1.2 Herstellung eines hydroxyfunktionellen Polyesters als Komponente C

Die hydroxyfunktionellen Polyester PES 1 - PES 5 wurden gemäß einem Verfahren, beschrieben in der DE 37 28 414 C1, durch Veresterung von Trimethylolpropan, Isophthalsäure und Ethylenglykol hergestellt. Die Einstellung des Festkörpers und der Viskosität erfolgen mit den Lösungsmitteln gemäß Tabelle 2.

**Tabelle 2:**

| Bezeichnung Polymerlösung | Lösungsmittel | Viskosität [mPas] | Festkörper [%] |
|---|---|---|---|
| PES 1 | EtiBu | 5930 | 70,2 |
| PES 2 | DEC | 6270 | 71,5 |
| PES 3 | MPK | 730 | 68,8 |
| PES 4 | MIBK | 860 | 70,4 |
| PES 5 | iBuAc | 4590 | 72,1 |

1.3 Herstellung von lösungsmittelbasierten Silikon-Polyesterhybridlösungen (Variante 1)

Die Silikon-Polyesterhybridlösungen SiPES 6 - SiPES 11 wurden nach einem Verfahren gemäß EP 0092701 hergestellt.

Die Silikon-Polyesterhybridlösung SiPES 12 wurde nach einem Verfahren gemäß EP 1072 660 hergestellt.

Hierbei wurden die Komponenten A und C aus Tabelle 1 und 2 eingesetzt. Tabelle 3 zeigt weitere relevante Daten auf.

Tabelle 3:

| Bezechnung | Polyorganosiloxan | Polyester | Lösungsmittel | Anteil Silikon [%] | Viskosität [mPas] | Fesikörper [%] |
|---|---|---|---|---|---|---|
| SiPES 6 | POS 1 | PES 1 | EtiBu | 30 | 18010 | 69,8 |
| SiPES 7 | POS 2 | PES 2 | DEC | 30 | 4270 | 61,8 |
| SiPES 8 | POS 2 | PES 3 | MPK | 30 | 1983 | 69,8 |
| SiPES 9 | POS 2 | PES 4 | MIBK | 30 | 2490 | 69,1 |
| SiPES 10 | POS 3 | PES 5 | iBuAc | 30 | 29740 | 70,4 |
| SiPES 11 | POS 3 | PES 3 | MPK | 50 | 2370 | 71,3 |
| SiPES 12 | POS 3 | PES 4 | MIBK | 80 | 2150 | 75,9 |

1.4 Herstellung von lösungsmittelbasierten Silikon-Polyesterhybridlösungen (Variante 2)

Die Silikon-Polyesterhybridlösungen SiPES 1 - SiPES 5 wurden nach einem Verfahren gemäß DE102013218981, Beispiel 1 hergestellt.

Hierbei wurden die organischen Polymere als Monomere eingesetzt. Tabelle 4 zeigt relevante Daten dieser Silikon-Polyesterhybridlösung SiPES 1 - SiPES 5.

**Tabelle 4:**

| Bezeichnung | Verwendetes Polyorganosiloxan | Lösungs-mittel | Anteil Silikon [%] | Viskosität [mPas] | Festkörper [%] |
|---|---|---|---|---|---|
| SiPES 1 | POS 1 | MIBK | 30 | 7220 | 91,2 |
| SiPES 2 | POS 2 | MIBK | 30 | 6400 | 89,8 |
| SiPES 3 | DC 3074 | MIBK | 30 | 6530 | 90,4 |
| SiPES 4 | DC 3074 | EtAc | 30 | 6210 | 89,1 |
| SiPES 5 | DC 3074 | EtAc | 40 | 5740 | 88,4 |

1.5 Lösungsmittelbasierte, epoxidbasierte Polyorganosiloxanhybrid-Lösung (zur Vereinfachung wird im Weiteren als Silikon-Polyepoxidhybridlösung genannt)Es wurde das handelsübliche Silikopon® EW von der Fa. Evonik Industries verwendet.

2. Herstellung von Polyorganosiloxanhybrid-Dispersionen

Es wurden die o.g. lösungsmittelbasierten Silikon-Polyesterhybridlösungen (Variante 1 und 2) und die o.g. lösungsmittelbasierte Silikon-Polyepoxidhybridlösung eingesetzt, welche in der u.g. Vorschriftbeschreibung als Polyorganosiloxanhybridharz bezeichnet werden.

2.1 Vorschrift 1, erfindungsgemäß:

80,0 Gramm einer 16%igen Lösung von Pluronic® F 127 in voll-entionisiertem (VE) Wasser, und 0,18 Gramm 50%iger Natronlauge werden in einem Behälter bei Raumtemperatur vorgelegt und bei 500 UpM mit einer Dispergierscheibe für 5 Minuten vermischt. Die Mischung wird mit 85%iger Phosphorsäureauf einer Leitfähigkeit von 1440 $\pm$ 50 $\mu$S.cm$^{-1}$ eingestellt. Anschließend werden 256,0 Gramm eines Polyorganosiloxanhybridharzes, gelöst in entsprechenden Mengen Lösungsmittel, zudosiert. Die Drehzahl des Rührorgans liegt hierbei bei 1000 UpM. Es entsteht eine hochviskose Paste, die nachdem die Zugabe des Harzes beendet wurde, weitere 60 Minuten bei 500 UpM gerührt wurde. Anschließend werden 150,0 Gramm VE-Wasser zudosiert. Im nächsten Schritt erfolgt das Abtrennen des Lösemittels durch Destillation. Dazu wird die Temperatur auf 50 °C erhöht und der Druck auf 40 mbar reduziert. Anschließend wird der Festkörper der Dispersion bestimmt. Diese wird anschließend durch Zugabe von VE-Wasser auf 50,0% eingestellt.

2.2 Vorschrift 2, erfindungsgemäß:

Wie Vorschrift 1, mit der Maßgabe, dass die Leitfähigkeit statt mit 85%ige Phosphorsäure mit Hilfe von 50%iger Essigsäure auf 1230 $\pm$ 50 $\mu$S.cm$^{-1}$ eingestellt wird.

2.3 Vorschrift 3, erfindungsgemäß:

Wie Vorschrift 2, mit der Maßgabe, dass zum Emulgieren 68,0 Gramm einer 20%igen Lösung von Synperonic® PE F 108 in VE-Wasser, 0,10 Gramm 25%iges Ammoniakwasser und 12,3 Gramm VE-Wasser verwendet werden und die Leitfähigkeit mit Hilfe von 50%iger Essigsäure auf 910 $\pm$ 50 $\mu$S.cm$^{-1}$ eingestellt wird.

2.4 Vorschrift 4, erfindungsgemäß:

80,0 Gramm einer 16%igen Lösung von Pluronic® PE F 127 in voll-entionisiertem (VE) Wasser, 6,0 Gramm Tergitol® 15-S-5 und 2,2 Gramm 25%iges Ammoniakwasser werden in einem Behälter bei Raumtemperatur vorgelegt und bei 500 UpM mit einer Dispergierscheibe während 5 Minuten vermischt. Anschließend werden 256,0 Gramm eines Polyorganosiloxanhybridharzes, gelöst in entsprechenden Mengen Lösungsmittel, zudosiert. Die Drehzahl des Rührorgans liegt bei 1000 UpM. Es entsteht eine hochviskose Paste, die nachdem die Zugabe des Harzes beendet wurde, weitere 60 Minuten bei 500 UpM gerührt wurde. Anschließend werden 150,0 Gramm VE-Wasser zudosiert. Die Mischung wird mit 50%iger Essigsäure auf einer Leitfähigkeit von 1,5 $\pm$ 0,1 S.m$^{-1}$ eingestellt. Im nächsten Schritt erfolgt das Abtrennen des Lösemittels durch Destillation. Dazu wird die Temperatur auf 50 °C erhöht und der Druck auf 40 mbar reduziert. Anschließend wird der Festkörper der Dispersion bestimmt. Diese wird anschließend durch Zugabe von VE-Wasser auf 50,0% eingestellt.

2.5 Vorschrift 5, nicht erfindungsgemäß:

Gemäß Beispiel 1 der Schrift DE 44 15 322 werden 365,0 Gramm einer Lösung eines Polyorganosiloxanhybridharzes in einem Behälter bei Raumtemperatur vorgelegt. Des Weiteren werden 8,1 Gramm flüssiges Tagat® R200, 8,1 Gramm des TEGO® Alkanol TD 6 und 82,3 Gramm VE-Wasser zugegeben und während 15 Minuten bei einer Drehzahl von 2000 UpM intensiv vermischt.

2.6 Vorschrift 6, nicht erfindungsgemäß:

Wie Vorschrift 1, mit der Maßgabe, dass für die Emulgatorlösung 12,1 Gramm des Tergitol® 15-S-15, 8,1 Gramm des Tergitol® 15-S-7, 0,09 Gramm 50%ige Natronlauge und 32,8 Gramm VE-Wasser verwendet wird.

Von jeder hergestellten Dispersion E1 - E24 wurden Teilchengröße, Leitfähigkeit und Restlösemittelgehalt bestimmt. Die Werte können aus Tabelle 5 entnommen werden.

Es wurde festgestellt, dass die Vergleichsdispersionen VE5, VE6, VE8, VE10, VE21 und VE23 nach der Vermischung von Harz, Wasser und Emulgator eine W/O-Dispersion ergaben, so dass eine Bestimmung der Teilchengröße und Restlösemittelgehalt nicht möglich war.

**Tabelle 5:**

| Dispersion | Polyorganosiloxanhybridharz | Vorschrift | Durchmesser [nm] | Leitfähigkeit Emulgatorlösung [$\mu$S/cm] | Restlösemittelgehalt [Gew.-%] |
|---|---|---|---|---|---|
| E1 | SiPES 1 | 1 | 687 | 1430 | 0,55 |
| E2 | SiPES 1 | 2 | 598 | 1220 | 0,76 |
| E3 | SiPES 1 | 3 | 408 | 901 | 0,43 |
| E4 | SiPES 1 | 4 | 601 | 288 | 0,32 |
| VE5 | SiPES 2 | 5 | - | 0 | - |
| VE6 | SiPES 3 | 6 | - | 1412 | - |
| E7 | SiPES 4 | 2 | 398 | 1210 | 0,57 |
| VE8 | SiPES 4 | 5 | - | 0 | - |
| E9 | SiPES 5 | 3 | 507 | 895 | 0,67 |
| VE10 | SiPES 5 | 6 | - | 1452 | - |
| E11 | SiPES 6 | 1 | 423 | 1435 | 0,91 |
| E12 | SiPES 6 | 2 | 511 | 1253 | 0,59 |
| E13 | SiPES 7 | 3 | 393 | 907 | 0,98 |
| E14 | SiPES 7 | 4 | 498 | 295 | 0,48 |
| E15 | SiPES 8 | 3 | 432 | 927 | 0,58 |
| E16 | SiPES 8 | 4 | 456 | 302 | 0,71 |
| E17 | SiPES 9 | 1 | 675 | 1454 | 0,92 |
| E18 | SiPES 9 | 2 | 891 | 1239 | 0,21 |
| E19 | SiPES 9 | 3 | 789 | 888 | 0,30 |
| E20 | SiPES 9 | 4 | 721 | 292 | 0,32 |
| VE21 | SiPES 10 | 5 | - | 0 | - |
| E22 | SiPES 11 | 3 | 734 | 916 | 0,39 |
| VE23 | SiPES 11 | 6 | - | 1441 | - |
| E24 | SiPES 12 | 4 | 906 | 307 | 0,11 |
| E25 | Silikopon EW | 1 | 564 | 1429 | 0,15 |
| E26 | Silikopon EW | 2 | 478 | 1236 | 0,26 |

(fortgesetzt)

| Dispersion | Polyorganosiloxanhybridharz | Vorschrift | Durchmesser [nm] | Leitfähigkeit Emulgatorlösung [$\mu$S/cm] | Restlösemittelgehalt [Gew.-%] |
|---|---|---|---|---|---|
| E27 | Silikopon EW | 3 | 602 | 899 | 0,23 |
| E28 | Silikopon EW | 4 | 434 | 287 | 0,35 |

Somit konnte zweifelfrei festgestellt werden, dass das Verfahren nach DE 44 15 322 für Polyorganosiloxanhybridharze nicht geeignet ist.

Der Restlösemittelgehalt der erfindungsgemäßen Dispersionen lag unter 1 Gew.-%.

**Anwendungstechnische Messung**

1. Applikation und Härtungsmethoden

1.1 Methode 1: 2K Isocyanat Vernetzung

Die Dispersionen E1 - E9 sowie E25 - E28 wurden im Verhältnis 3:1 mit Bayhydur® 3100 gemischt und die Mischungen wurden mit Hilfe eines Spiralrakels auf Q-Panel® Farbprüfbleche aus Aluminium der Firma Q-Lab aufgezogen. Alloy 3003H14; 0.025" thick (0.6 mm); bare mill finish. Die Nassschichtdicke beträgt 100 $\mu$m. Nach 24 Stunden Trocknung bei Raumtemperatur resultieren klare, störungsfreie Filme mit 50 $\mu$m Trockenschichtdicke. Die Prüfbleche wurden für 10 Tage bei 23°C und 65% relativer Luftfeuchte gealtert.

1.2 Methode 2: Thermische Vernetzung

Die Dispersionen E10 - E24 sowie E25 - E28 werden mit Hilfe eines Spiralrakels auf Q-Panel® Farbprüfbleche aus Aluminium der Firma Q-Lab aufgezogen. Alloy 3003H14; 0.025" thick (0.6 mm); bare mill finish. Die Nassschichtdicke beträgt 100 $\mu$m. Nach 0,5 Stunden Trocknung bei Raumtemperatur resultieren klare, störungsfreie Filme mit 50 $\mu$m Trockenschichtdicke. Nach dieser Ablüftzeit bei Raumtemperatur wurden die luftgetrockneten Prüfbleche bei 250°C für 15 Minuten in einem Umluftofen eingebrannt.

Analog wurden die lösungsmittelbasierten SiPES 1, SiPES 2, SiPES 8, SiPES 9 und SiPES 12 appliziert und ausgehärtet.

**3. Messung der Pendelhärte**

Die Filme wurden mittels Pendelhärte nach König (DIN 53 157) charakterisiert
Die Werte sind aus Tabelle 6 zu entnehmen.

**Tabelle 6: Pendelhärte**

| Dispersion | Härtungsmethode | Pendelhärte |
|---|---|---|
| E1 | 1 | 132 |
| E2 | 1 | 122 |
| E3 | 1 | 130 |
| E4 | 1 | 128 |
| E7 | 1 | 122 |
| E9 | 1 | 125 |
| E11 | 2 | 163 |
| E12 | 2 | 161 |
| E13 | 2 | 158 |
| E14 | 2 | 166 |
| E15 | 2 | 162 |

EP 3 524 651 B1

(fortgesetzt)

| Dispersion | Härtungsmethode | Pendelhärte |
|---|---|---|
| E16 | 2 | 155 |
| E17 | 2 | 159 |
| E18 | 2 | 163 |
| E19 | 2 | 155 |
| E20 | 2 | 154 |
| E22 | 2 | 161 |
| E24 | 2 | 157 |
| E25 | 1 | 115 |
| E26 | 1 | 125 |
| E27 | 2 | 145 |
| E28 | 2 | 165 |
| Vergleichsbeispiele Lösungsmittelbasiert | | |
| SiPES 1 | 1 | 133 |
| SiPES 2 | 1 | 135 |
| SiPES 8 | 2 | 167 |
| SiPES 9 | 2 | 159 |
| SiPES 12 | 2 | 155 |

Es hat sich gezeigt, dass die erfindungsgemäßen wässrigen Dispersionen ebenso gute Pendelhärte-Werte aufweisen wie die lösungsmittelbasierten Dispersionen. Die Pendelhärte ist wichtig, weil sie einen direkten Aufschluss über die Gebrauchstüchtigkeit der finalen Beschichtung der erfindungsgemäßen Polyorganosiloxanhybridharz-Dispersion gibt.

**Patentansprüche**

1. Wässrige Polyorganosiloxanhybridharz-Dispersion umfassend

    - mindestens ein Polyorganosiloxanhybrid-Harz,
    - mindestens ein amphiphiler Emulgator, wobei es sich bei den Emulgatoren um Blockcopolymere mit einem oder mehreren hydrophoben Einheiten und mit einem oder mehreren hydrophilen Einheiten, wobei bevorzugt die hydrophobe Einheit aus Polypropylenoxid, organisch modifiziertem Polypropylenoxid oder Polybutylenoxid besteht und die hydrophile Einheiten aus Polyethylenoxid bestehen, handelt und
    - Wasser.

2. Polyorganosiloxanhybridharz-Dispersion nach Anspruch 1, **dadurch gekennzeichnet, dass** es sich bei dem Polyorganosiloxanhybridharz um ein mit organischem Polymer-modifiziertes Polyorganosiloxan handelt.

3. Polyorganosiloxanhybridharz-Dispersion nach Anspruch 1 oder 2, **dadurch gekennzeichnet, dass** es sich bei dem Polyorganosiloxanhybridharz um Umsetzungsprodukte einer Zusammensetzung enthaltend

    - Komponente A) 5 bis 95 Gew.-Teile, bevorzugt 10 bis 70 Gew.-Teile eines oder mehrerer Polyorganosiloxane der allgemeinen Formel

    $$R_aSi(OR')_bO_{(4-a-b/2)} \qquad \text{Formel (I)}$$

    mit 0<a<2, 0<b<2 und a+b<4,
    - optional Komponente B) 0 - 20 Gew.-Teile, bevorzugt 1 -10 Gew.-Teile eines oder mehrerer linearer und/oder

16

verzweigter Polyorganosiloxane der Formel

$$R''O\text{-}[R'''_2Si\text{-}O]_n\text{-} \qquad \text{Formel (II)}$$

- Komponente C) 5 bis 95 Gew.-Teile, bevorzugt 30 bis 90 Gew.-Teile eines organischen Polymers,

wobei
$R_a$, R', R'' und R''' jeweils unabhängig voneinander für einen Alkylrest mit 1 bis 8 C-Atomen oder einen aromatischen Rest mit 6 bis 20 C-Atomen steht und n für eine Zahl im Bereich von 4 bis 250 steht, handelt.

4. Polyorganosiloxanhybridharz-Dispersion nach Anspruch 3, **dadurch gekennzeichnet,**
   **dass** das organische Polymer ausgewählt aus der Gruppe der Polyepoxide, Polyester, Polyacrylate und/oder -methacrylate sowie Copolymere daraus, Polyurethane, Cellulosederivate, Polysulphone, Polyethersulphone, Polyphenylensulfide und -oxide, Polyamide, Polyamidimid, Polyimide, Polyether, aromatische und aliphatische glycidylfunktionelle Polymere, Oligomere, Phenoxyharze, Polycarbonate, Keton-Formaldehyharze, Polyvinylharze, ausgewählt aus Polyvinylalkohol, Polyglycerine, Polyvinylacetat,deren (Teil-) Hydrolysate und Derivate, Phenolharze, Fluorpolymere, Alkydharze und Mischungen daraus.

5. Polyorganosiloxanhybridharz-Dispersion nach Anspruch 4, **dadurch gekennzeichnet, dass** das organische Polymer Hydroxylgruppen und/oder acide Wasserstoff enthält.

6. Polyorganosiloxanhybridharz-Dispersion nach Anspruch 5, **dadurch gekennzeichnet,**
   **dass** der Emulgator einen nach der in der Beschreibung angegebenen Methode bestimmten HLB-Wert von 9 bis 19, bevorzugt einen HLB-Wert von 11 bis 17, aufweist.

7. Polyorganosiloxanhybridharz-Dispersion nach Anspruch 6, **dadurch gekennzeichnet, dass** es sich bei den Emulgatoren um Triblockcopolymeren mit einem Mittelblock aus Polypropylenoxid und zwei endständigen Blöcken aus Polyethylenoxid oder Gemische daraus handelt.

8. Polyorganosiloxanhybridharz-Dispersion nach einem der vorgenannten Ansprüche,

   **dadurch gekennzeichnet, dass** der nach der in der Beschreibung angegebenen Methode bestimmte Restlösungsmittelgehalt bei < 5,0 Gew.-%,
   bevorzugt < 2,5 Gew-%, besonders bevorzugt < 1,0 Gew.-%, bezogen auf die Polyorganosiloxanhybridharz-Dispersion, liegt.

9. Polyorganosiloxanhybridharz-Dispersion nach einem der vorgenannten Ansprüche, **dadurch gekennzeichnet, dass** sie weitere Zusatzstoffe aufweist, ausgewählt aus Entschäumern, Entlüftern, Rheologieadditiven, Konservierungsstoffen, Substratnetzmitteln, Vernetzern, Trocknungshilfen, Katalysatoren, Antioxidantien, Hautverhinderungsmitteln, Anti-Absatzmitteln, Verdickern, Koaleszenzmitteln, Filmbildehilfsmitteln, Füllstoffen, Pigmenten und/oder Dispergiermitteln.

10. Polyorganosiloxanhybridharz-Dispersion nach Anspruch 9, **dadurch gekennzeichnet,**
    **dass** als Konservierungsstoffe Fungizide, Bakterizide, Pestizide, Algizide und/oder Herbizide verwendet werden.

11. Polyorganosiloxanhybridharz-Dispersion nach einem der vorgenannten Ansprüche,
    **dadurch gekennzeichnet, dass** der mittlere, volumengewichtete Durchmesser der Polyorganosiloxanhybridharzpartikeln, gemessen nach ISO 13320:2009, zwischen 0,1 - 10,0 $\mu$m, zwischen 0,1 - 2,0 $\mu$m, bevorzugt zwischen 0,2 - 1,0 $\mu$m und besonders bevorzugt zwischen 0,2 - 0,7 $\mu$m, beträgt.

12. Polyorganosiloxanhybridharz-Dispersion nach einem der vorgenannten Ansprüche,
    **dadurch gekennzeichnet, dass** sie einen nach der in der Beschreibung angegebenen Methode bestimmten Festkörpergehalt von 30 Gew.-% -70 Gew.-%, bevorzugt 45 Gew.-% - 55 Gew.-%, bezogen auf die Dispersion aufweist.

13. Verfahren zur Herstellung wässriger Polyorganosiloxanhybridharz-Dispersion nach Anspruch 1, umfassend die Schritte

- Emulgieren einer Polyorganosiloxanhybridharz-Lösung enthaltend ein organisches Lösungsmittel mit mindestens einem Emulgator oder einem Emulgatorsystem,
- Zugabe von Wasser,
- Abtrennung des Lösungsmittels,

wobei es sich bei den Emulgatoren oder dem Emulgatorsystem um Blockcopolymere mit einem oder mehreren hydrophoben Einheiten und mit einem oder mehreren hydrophilen Einheiten, wobei bevorzugt die hydrophobe Einheit aus Polypropylenoxid, organisch modifiziertem Polypropylenoxid oder Polybutylenoxid besteht und die hydrophile Einheiten aus Polyethylenoxid bestehen, handelt.

14. Verfahren zur Herstellung wässriger Polyorganosiloxanhybridharz-Dispersion nach Anspruch 13, **dadurch gekennzeichnet, dass** eine wässrige Emulgatorlösung oder eine wässrige Emulgatorsystemlösung eingesetzt wird, wobei deren Leitfähigkeit, gemessen nach DIN 53779, zwischen 10 - 25.000 $\mu$S cm$^{-1}$, bevorzugt zwischen 50 - 5.000 $\mu$S cm$^{-1}$ und besonderes bevorzugt zwischen 200 - 2.500 $\mu$S cm$^{-1}$, beträgt.

15. Verfahren zur Herstellung wässriger Polyorganosiloxanhybridharz-Dispersion nach Anspruch 14, **dadurch gekennzeichnet, dass** die Leitfähigkeit der wässrigen Emulgatorlösung oder der wässrigen Emulgatorsystemlösung eingestellt wird.

16. Verfahren nach Anspruch 13, **dadurch gekennzeichnet, dass** es sich bei dem Polyorganosiloxanhybridharz um Umsetzungsprodukte einer Zusammensetzung enthaltend

- Komponente A) 5 bis 95 Gew.-Teile, , bevorzugt 10 bis 70 Gew.-Teile eines oder mehrerer Polyorganosiloxane der allgemeinen Formel

$$R_aSi(OR')_bO_{(4-a-b/2)} \qquad \text{Formel (I)}$$

mit 0<a<2, 0<b<2 und a+b<4,
- optional Komponente B) 0 - 20 Gew.-Teile, bevorzugt 1 -10 Gew.-Teile eines oder mehrerer linearer und/oder verzweigter Polyorganosiloxane der Formel

$$R"O-[R'''_2Si-O]_n- \qquad \text{Formel (II)}$$

- Komponente C) 5 bis 95 Gew.-Teile, bevorzugt 30 bis 90 Gew.-Teile eines organischen Polymers,

wobei

$R_a$, R', R" und R''' jeweils unabhängig voneinander für einen Alkylrest mit 1 bis 8 C-Atomen oder einen aromatischen Rest mit 6 bis 20 C-Atomen steht und n für eine Zahl im Bereich von 4 bis 250 steht, handelt.

17. Verfahren nach Anspruch 13, **dadurch gekennzeichnet, dass** es sich bei dem organischen Polymer um Hydroxylgruppen enthaltenden organischen Polymere handelt, vorzugsweise ausgewählt aus der Gruppe der Polyepoxide, Polyester, Polyacrylate und/oder -methacrylate sowie Copolymere daraus, Polyurethane, Cellulosederivate, Polysulphone, Polyethersulphone, Polyphenylensulfide und -oxide, Polyamide, Polyamidimid, Polyimide, Polyether, aromatische und aliphatische glycidylfunktionelle Polymere, Oligomere, Phenoxyharze, Polycarbonate, Keton-Formaldehyharze, Polyvinylharze, ausgewählt aus Polyvinylalkohol, Polyglycerine, Polyvinylacetat,deren (Teil-) Hydrolysate und Derivate, Phenolharze, Fluorpolymere, Alkydharze und Mischungen daraus.

18. Verfahren nach Anspruch 17, **dadurch gekennzeichnet, dass** der Emulgator oder das Emulgatorsystem einen nach der in der Beschreibung angegebenen Methode bestimmten HLB-Wert von 9 bis 19, bevorzugt einen HLB-Wert von 11 bis 17, aufweist.

19. Verfahren nach Anspruch 18, **dadurch gekennzeichnet, dass** es sich bei den Emulgatoren oder Emulgatorsystem um Triblockcopolymeren mit einem Mittelblock aus Polypropylenoxid und zwei endständigen Blöcken aus Polyethylenoxid oder Gemische daraus handelt.

20. Verfahren nach Anspruch 13, **dadurch gekennzeichnet, dass** es sich bei dem Lösungsmittel um ein organisches Lösungsmittel oder Mischungen davon handelt, das bei der Herstellung des Polyorganosiloxanhybridharzes eingesetzt wurde.

21. Verfahren nach Anspruch 20, **dadurch gekennzeichnet, dass** das organische Lösungsmittel oder Mischungen davon einen Siedepunktsbereich von 50°C - 150°C, bevorzugt 90°C - 120°C aufweist.

22. Verfahren nach Anspruch 13, **dadurch gekennzeichnet, dass** die Abtrennung des Lösungsmittels mittels Destillation bei vermindertem Druck mit oder ohne Strippinggas, Wasserdampfdestillation, mittels eines Membranverfahrens, eines Dünnschichtverdampfers oder eines Gegenstromverfahrens erfolgt.

23. Verfahren nach Anspruch 13, **dadurch gekennzeichnet, dass** die Polyorganosiloxanhybridharz-Lösung eine Polyorganosiloxanhybridharz-Konzentration von 40,0 Gew.-% - 95,0 Gew.-%, bevorzugt 60,0 Gew.-% - 70,0 Gew.-%, bezogen auf die Polyorganosiloxanhybridharz-Lösung, aufweist.

24. Verwendung der Polyorganosiloxanhybridharz-Dispersion nach einem der Ansprüche 1 - 12 in Beschichtungsstoffen, sowie Lacken und Farben, Substratbeschichtungen, Halbzeugen, Klebstoffen, Tinten, Dichtstoffen, Compoundierungsmatrizes und Schlichten.

25. Substrate, insbesondere Backbleche, Backformen, Pfannen und Metalltöpfe, beschichtet mit einer Zusammensetzung enthaltend einer Dispersion nach einem der Ansprüche 1 bis 12.


**Claims**

1. Aqueous polyorganosiloxane hybrid resin dispersion comprising

   - at least one polyorganosiloxane hybrid resin,
   - at least one amphiphilic emulsifier, where the emulsifiers are block copolymers having one or more hydrophobic units and having one or more hydrophilic units, where the hydrophobic unit preferably consists of polypropylene oxide, organically modified polypropylene oxide or polybutylene oxide and the hydrophilic units consist of polyethylene oxide, and
   - water.

2. Polyorganosiloxane hybrid resin dispersion according to Claim 1, **characterized in that** the polyorganosiloxane hybrid resin is an organic polymer-modified polyorganosiloxane.

3. Polyorganosiloxane hybrid resin dispersion according to Claim 1 or 2, **characterized in that** the polyorganosiloxane hybrid resin comprises reaction products of a composition comprising

   - component A) 5 to 95 parts by weight, preferably 10 to 70 parts by weight, of one or more polyorganosiloxanes of the general formula

   $$R_aSi\,(OR')_bO_{(4-a-b/2)} \qquad \text{Formula (I)}$$

   with 0<a<2, 0<b<2 and a+b<4,
   - optionally component B) 0-20 parts by weight, preferably 1-10 parts by weight, of one or more linear and/or branched polyorganosiloxanes of the formula

   $$R''O\text{-}[R'''_2Si\text{-}O]_n\text{-} \qquad \text{Formula (II)}$$

   - component C) 5 to 95 parts by weight, preferably 30 to 90 parts by weight, of an organic polymer,

   where
   $R_a$, R', R'' and R''' are each independently an alkyl radical having 1 to 8 carbon atoms or an aromatic radical having 6 to 20 carbon atoms and n is a number in the range from 4 to 250.

4. Polyorganosiloxane hybrid resin dispersion according to Claim 3, **characterized in that** the organic polymer is selected from the group of the polyepoxides, polyesters, polyacrylates and/or polymethacrylates and copolymers thereof, polyurethanes, cellulose derivatives, polysulfones, polyether sulfones, polyphenylene sulfides and oxides, polyamides, polyamide imide, polyimides, polyethers, aromatic and aliphatic glycidyl-functional polymers, oligomers, phenoxy resins, polycarbonates, ketone-formaldehyde resins, polyvinyl resins selected from polyvinyl alcohol, polyglycerols, polyvinylacetate, (partial) hydrolysates and derivatives thereof, phenolic resins, fluoropolymers, alkyd resins and mixtures thereof.

5. Polyorganosiloxane hybrid resin dispersion according to Claim 4, **characterized in that** the organic polymer contains hydroxyl groups and/or acidic hydrogen.

6. Polyorganosiloxane hybrid resin dispersion according to Claim 5, **characterized in that** the emulsifier has an HLB value, determined by the method specified in the description, of 9 to 19, preferably an HLB value of 11 to 17.

7. Polyorganosiloxane hybrid resin dispersion according to Claim 6, **characterized in that** the emulsifiers are triblock copolymers having a middle block of polypropylene oxide and two terminal blocks of polyethylene oxide or mixtures thereof.

8. Polyorganosiloxane hybrid resin dispersion according to any of the preceding claims, **characterized in that** the residual solvent content, determined by the method specified in the description, is < 5.0% by weight, preferably < 2.5% by weight, more preferably < 1.0% by weight, based on the polyorganosiloxane hybrid resin dispersion.

9. Polyorganosiloxane hybrid resin dispersion according to any of the preceding claims, **characterized in that** it includes further additives selected from defoamers, deaerating agents, rheology additives, preservatives, substrate wetting agents, crosslinkers, drying aids, catalysts, antioxidants, anti-skinning agents, anti-settling agents, thickeners, coalescing agents, film-forming aids, fillers, pigments and/or dispersants.

10. Polyorganosiloxane hybrid resin dispersion according to Claim 9, **characterized in that** the preservatives used are fungicides, bactericides, pesticides, algicides and/or herbicides.

11. Polyorganosiloxane hybrid resin dispersion according to any of the preceding claims, **characterized in that** the average volume-weighted diameter of the polyorganosiloxane hybrid resin particles, measured according to ISO 13320:2009, is between 0.1-10.0 $\mu$m, between 0.1-2.0 $\mu$m, preferably between 0.2-1.0 $\mu$m and more preferably between 0.2-0.7 $\mu$m.

12. Polyorganosiloxane hybrid resin dispersion according to any of the preceding claims, **characterized in that** it has a solids content, determined by the method specified in the description, of 30% by weight-70% by weight, preferably 45% by weight-55% by weight, based on the dispersion.

13. Process for preparing aqueous polyorganosiloxane hybrid resin dispersion according to Claim 1, comprising the steps of

   - emulsifying a polyorganosiloxane hybrid resin solution comprising an organic solvent with at least one emulsifier or an emulsifier system,
   - adding water,
   - removing the solvent,

   where the emulsifiers or the emulsifier system comprise(s) block copolymers having one or more hydrophobic units and having one or more hydrophilic units, where the hydrophobic unit preferably consists of polypropylene oxide, organically modified polypropylene oxide or polybutylene oxide, and the hydrophilic units consist of polyethylene oxide.

14. Process for preparing aqueous polyorganosiloxane hybrid resin dispersion according to Claim 13, **characterized in that** an aqueous emulsifier solution or an aqueous emulsifier system solution is used, where the conductivity thereof, measured to DIN 53779, is between 10-25 000 $\mu$S cm$^{-1}$, preferably between 50-5000 $\mu$S cm$^{-1}$ and more preferably between 200-2500 $\mu$S cm$^{-1}$.

15. Process for preparing aqueous polyorganosiloxane hybrid resin dispersion according to Claim 14, **characterized in that** the conductivity of the aqueous emulsifier solution or the aqueous emulsifier system solution is adjusted.

16. Process according to Claim 13, **characterized in that** the polyorganosiloxane hybrid resin comprises reaction products of a composition comprising

- component A) 5 to 95 parts by weight, preferably 10 to 70 parts by weight, of one or more polyorganosiloxanes of the general formula

$$R_aSi\,(OR')_bO_{(4-a-b/2)} \qquad \text{Formula (I)}$$

with 0<a<2, 0<b<2 and a+b<4,
- optionally component B) 0-20 parts by weight, preferably 1-10 parts by weight, of one or more linear and/or branched polyorganosiloxanes of the formula

$$R''O\text{-}[R'''_2Si\text{-}O]_n\text{-} \qquad \text{Formula (II)}$$

- component C) 5 to 95 parts by weight, preferably 30 to 90 parts by weight, of an organic polymer,

where
$R_a$, R', R" and R''' are each independently an alkyl radical having 1 to 8 carbon atoms or an aromatic radical having 6 to 20 carbon atoms and n is a number in the range from 4 to 250.

17. Process according to Claim 13, **characterized in that** the organic polymer comprises organic polymers containing hydroxyl groups, preferably selected from the group of the polyepoxides, polyesters, polyacrylates and/or polymethacrylates and copolymers thereof, polyurethanes, cellulose derivatives, polysulfones, polyether sulfones, polyphenylene sulfides and oxides, polyamides, polyamide imide, polyimides, polyethers, aromatic and aliphatic glycidyl-functional polymers, oligomers, phenoxy resins, polycarbonates, ketone-formaldehyde resins, polyvinyl resins selected from polyvinyl alcohol, polyglycerols, polyvinylacetate, (partial) hydrolysates and derivatives thereof, phenolic resins, fluoropolymers, alkyd resins and mixtures thereof.

18. Process according to Claim 17, **characterized in that** the emulsifier or the emulsifier system has an HLB value, determined by the method specified in the description, of 9 to 19, preferably an HLB value of 11 to 17.

19. Process according to Claim 18, **characterized in that** the emulsifiers or emulsifier system comprise(s) triblock copolymers having a middle block of polypropylene oxide and two terminal blocks of polyethylene oxide or mixtures thereof.

20. Process according to Claim 13, **characterized in that** the solvent is an organic solvent or a mixture of organic solvents that has been used in the preparation of the polyorganosiloxane hybrid resin.

21. Process according to Claim 20, **characterized in that** the organic solvent or mixture thereof has a boiling point range of 50°C-150°C, preferably 90°C-120°C.

22. Process according to Claim 13, **characterized in that** the solvent is removed by means of distillation under reduced pressure with or without stripping gas, steam distillation, or by means of a membrane process, a thin-film evaporator or a countercurrent exchange process.

23. Process according to Claim 13, **characterized in that** the polyorganosiloxane hybrid resin solution has a polyorganosiloxane hybrid resin concentration of 40.0% by weight-95.0% by weight, preferably 60.0% by weight-70.0% by weight, based on the polyorganosiloxane hybrid resin solution.

24. Use of the polyorganosiloxane hybrid resin dispersion according to any of Claims 1-12 in coating materials, and also coatings and paints, substrate coatings, semifinished products, adhesives, inks, sealants, compounding matrices and sizes.

25. Substrates, especially baking trays, baking tins, pans and metal pots, coated with a composition comprising a dispersion according to any of Claims 1 to 12.

**Revendications**

1. Dispersion aqueuse de résine hybride de polyorganosiloxane, comprenant

   - au moins une résine hybride de polyorganosiloxane,
   - au moins un émulsifiant amphiphile, où il s'agit, pour les émulsifiants, de copolymères séquencés présentant un ou plusieurs motifs hydrophobes et un ou plusieurs motifs hydrophiles, le motif hydrophobe étant de préférence constitué de poly(oxyde de propylène), de poly(oxyde de propylène) organiquement modifié ou de poly(oxyde de butylène) et les motifs hydrophiles étant constitués de poly(oxyde d'éthylène) et
   - de l'eau.

2. Dispersion de résine hybride de polyorganosiloxane selon la revendication 1, **caractérisée en ce qu'**il s'agit, pour la résine hybride de polyorganosiloxane, d'un polyorganosiloxane modifié par un polymère organique.

3. Dispersion de résine hybride de polyorganosiloxane selon la revendication 1 ou 2, **caractérisée en ce qu'**il s'agit, pour la résine hybride de polyorganosiloxane, de produits de transformation d'une composition contenant

   - composant A) 5 à 95 parties en poids, de préférence 10 à 70 parties en poids d'un ou de plusieurs polyorganosiloxanes de formule générale

   $$R_aSi\,(OR')_bO_{(4-a-b/2)} \qquad \text{Formule (I)}$$

   dans laquelle 0<a<2, 0<b<2 et a+b<4,
   - éventuellement composant B) 0 - 20 parties en poids, de préférence 1 - 10 parties en poids d'un ou de plusieurs polyorganosiloxanes linéaires et/ou ramifiés de formule

   $$R''O\text{-}\ [R'''_2Si\text{-}O]_n\text{-} \qquad \text{Formule (II)}$$

   - composant C) 5 à 95 parties en poids, de préférence 30 à 90 parties en poids, d'un polymère organique

   dans lesquelles
   $R_a$, R', R" et R''' représentent, à chaque fois indépendamment les uns des autres, un radical alkyle comprenant 1 à 8 atomes de carbone ou un radical aromatique comprenant 6 à 20 atomes de carbone et n représente un nombre dans la plage de 4 à 250.

4. Dispersion de résine hybride de polyorganosiloxane selon la revendication 3, **caractérisée en ce que** le polymère organique est choisi dans le groupe des polyépoxydes, des polyesters, des polyacrylates et/ou des polyméthacrylates ainsi que de leurs copolymères, des polyuréthanes, des dérivés de cellulose, des polysulfones, des polyéthersulfones, des poly(sulfures et oxydes de phénylène), des polyamides, des polyamidimides, des polyimides, des polyéthers, des polymères et oligomères aromatiques et aliphatiques à fonctionnalité glycidyle, des résines phénoxy, des polycarbonates, des résines de cétone-formaldéhyde, des résines de polyvinyle, choisies parmi le poly(alcool vinylique), les polyglycérols, le poly(acétate de vinyle), leurs hydrolysats (partiels) et leurs dérivés, des résines phénoliques, des polymères fluorés, des résines alkyde et de leurs mélanges.

5. Dispersion de résine hybride de polyorganosiloxane selon la revendication 4, **caractérisée en ce que** le polymère organique contient des groupes hydroxyle et/ou de l'hydrogène acide.

6. Dispersion de résine hybride de polyorganosiloxane selon la revendication 5, **caractérisée en ce que** l'émulsifiant présente une valeur HLB (équilibre hydrophile/lipophile), déterminée selon la méthode indiquée dans la description, de 9 à 19, de préférence une valeur HLB de 11 à 17.

7. Dispersion de résine hybride de polyorganosiloxane selon la revendication 6, **caractérisée en ce qu'**il s'agit, pour les émulsifiants, de copolymères à trois blocs présentant un bloc central en poly(oxyde de propylène) et deux blocs terminaux en poly(oxyde d'éthylène) ou de leurs mélanges.

8. Dispersion de résine hybride de polyorganosiloxane selon l'une des revendications susmentionnées, **caractérisée en ce que** la teneur résiduelle en solvant déterminée selon la méthode décrite dans la description se situe à < 5,0% en poids, de préférence à < 2,5% en poids, de manière particulièrement préférée à < 1,0% en poids, par rapport à la dispersion de résine hybride de polyorganosiloxane.

9.  Dispersion de résine hybride de polyorganosiloxane selon l'une des revendications susmentionnées, **caractérisée en ce qu'**elle présente d'autres additifs, choisis parmi les antimousses, les agents de désaération, les additifs rhéologiques, les conservateurs, les agents mouillants de substrat, les réticulants, les adjuvants dessiccateurs, les catalyseurs, les antioxydants, les agents de prévention de formation de peau, les agent antiredéposition, les épaississants, les coalescents, les adjuvants filmogènes, les charges, les pigments et/ou les dispersants.

10. Dispersion de résine hybride de polyorganosiloxane selon la revendication 9, **caractérisée en ce que** des fongicides, des bactéricides, des pesticides, des algicides et/ou des herbicides sont utilisés comme conservateurs.

11. Dispersion de résine hybride de polyorganosiloxane selon l'une des revendications susmentionnées, **caractérisée en ce que** le diamètre moyen pondéré en volume des particules de résine hybride de polyorganosiloxane, mesuré selon la norme ISO 13320:2009, se situe entre $0,1 - 10,0 \, \mu$m, entre $0,1 - 2,0 \, \mu$m, de préférence entre $0,2 - 1,0 \, \mu$m et de manière particulièrement préférée entre $0,2 - 0,7 \, \mu$m.

12. Dispersion de résine hybride de polyorganosiloxane selon l'une des revendications susmentionnées, **caractérisée en ce qu'**elle présente une teneur en solides, déterminée selon la méthode décrite dans la description, de 30% en poids - 70% en poids, de préférence de 45% en poids - 55% en poids, par rapport à la dispersion.

13. Procédé de préparation d'une dispersion aqueuse de résine hybride de polyorganosiloxane selon la revendication 1, comprenant les étapes :

    - émulsification d'une solution de résine hybride de polyorganosiloxane contenant un solvant organique avec au moins un émulsifiant ou un système émulsifiant,
    - ajout d'eau,
    - séparation du solvant,

    où il s'agit, pour émulsifiants ou le système émulsifiant, de copolymères séquencés présentant un ou plusieurs motifs hydrophobes et un ou plusieurs motifs hydrophiles, le motif hydrophobe étant de préférence constitué de poly(oxyde de propylène), de poly(oxyde de propylène) organiquement modifié ou de poly(oxyde de butylène et les motifs hydrophiles étant constitués de poly(oxyde d'éthylène).

14. Procédé de préparation d'une dispersion aqueuse de résine hybride de polyorganosiloxane selon la revendication 13, **caractérisé en ce qu'**une solution aqueuse d'émulsifiant ou une solution aqueuse de système émulsifiant est utilisée, sa conductibilité, mesurée selon la norme DIN 53779, se situant entre $10 - 25\,000 \, \mu$S cm$^{-1}$, de préférence entre $50 - 5.000 \, \mu$S cm$^{-1}$ et de manière particulièrement préférée entre $200 - 2\,500 \, \mu$S cm$^{-1}$.

15. Procédé de préparation d'une dispersion aqueuse de résine hybride de polyorganosiloxane selon la revendication 14, **caractérisé en ce que** la conductibilité de la solution aqueuse d'émulsifiant ou de la solution aqueuse de système émulsifiant est réglée.

16. Procédé selon la revendication 13, **caractérisé en ce qu'**il s'agit, pour la résine hybride de polyorganosiloxane, de produits de transformation d'une composition contenant

    - composant A) 5 à 95 parties en poids, de préférence 10 à 70 parties en poids d'un ou de plusieurs polyorganosiloxanes de formule générale

    $$R_a Si \, (OR')_b O_{(4-a-b/2)} \qquad \text{Formule (I)}$$

    dans laquelle $0<a<2$, $0<b<2$ et $a+b<4$,
    - éventuellement composant B) 0 - 20 parties en poids, de préférence 1 - 10 parties en poids d'un ou de plusieurs polyorganosiloxanes linéaires et/ou ramifiés de formule

    $$R"O- [R'''_2 Si-O]_n - \qquad \text{Formule (II)}$$

    - composant C) 5 à 95 parties en poids, de préférence 30 à 90 parties en poids, d'un polymère organique

dans lesquelles

$R_a$, R', R" et R‴ représentent, à chaque fois indépendamment les uns des autres, un radical alkyle comprenant 1 à 8 atomes de carbone ou un radical aromatique comprenant 6 à 20 atomes de carbone et n représente un nombre dans la plage de 4 à 250.

17. Procédé selon la revendication 13, **caractérisé en ce qu'**il s'agit, pour le polymère organique, de polymères organiques contenant des groupes hydroxyle, de préférence choisis dans le groupe des polyépoxydes, des polyesters, des polyacrylates et/ou des polyméthacrylates ainsi que de leurs copolymères, des polyuréthanes, des dérivés de cellulose, des polysulfones, des polyéthersulfones, des poly(sulfures et oxydes de phénylène), des polyamides, des polyamidimides, des polyimides, des polyéthers, des polymères et oligomères aromatiques et aliphatiques à fonctionnalité glycidyle, des résines phénoxy, des polycarbonates, des résines de cétone-formaldéhyde, des résines de polyvinyle, choisies parmi le poly(alcool vinylique), les polyglycérols, le poly(acétate de vinyle), leurs hydrolysats (partiels) et leurs dérivés, des résines phénoliques, des polymères fluorés, des résines alkyde et de leurs mélanges.

18. Procédé selon la revendication 17, **caractérisé en ce que** l'émulsifiant ou le système émulsifiant présente une valeur HLB (équilibre hydrophile/lipophile), déterminée selon la méthode indiquée dans la description, de 9 à 19, de préférence une valeur HLB de 11 à 17.

19. Procédé selon la revendication 18, **caractérisé en ce qu'**il s'agit, pour les émulsifiants ou le système émulsifiant, de copolymères à trois blocs présentant un bloc central en poly(oxyde de propylène) et deux blocs terminaux en poly(oxyde d'éthylène) ou de leurs mélanges.

20. Procédé selon la revendication 13, **caractérisé en ce qu'**il s'agit, pour le solvant, d'un solvant organique ou de mélanges de solvants organiques qui a/ont été utilisé(s) lors de la préparation de la résine hybride de polyorganosiloxane.

21. Procédé selon la revendication 20, **caractérisé en ce que** le solvant organique ou des mélanges de solvants organiques présente(nt) un poids d'ébullition de 50°C - 150°C, de préférence de 90°C - 120°C.

22. Procédé selon la revendication 13, **caractérisé en ce que** la séparation du solvant est effectuée au moyen d'une distillation sous pression réduite, avec ou sans gaz de désextraction, d'une distillation à la vapeur d'eau, au moyen d'un procédé à membrane, d'un évaporateur à couche mince ou d'un procédé à contre-courant.

23. Procédé selon la revendication 13, **caractérisé en ce que** la solution de résine hybride de polyorganosiloxane présente une concentration en résine hybride de polyorganosiloxane de 40,0% en poids - 95,0% en poids, de préférence de 60,0% en poids - 70,0% en poids, par rapport à la solution de résine hybride de polyorganosiloxane.

24. Utilisation de la dispersion de résine hybride de polyorganosiloxane selon l'une des revendications 1 - 12 dans des substances de revêtement, telles que des laques et des peintures, des revêtements de substrat, des produits semi-finis, des adhésifs, des encres, des substances d'étanchéité, des matrices de compoundage et des produits d'encollage.

25. Substrats, en particulier tôles de cuisson, moules de cuisson, poêles et casseroles métalliques, revêtus par une composition contenant une dispersion selon l'une des revendications 1 à 12.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 098940 A
- DE 2158348
- DE 4415322 A1
- CN 107573474 A
- EP 0008090 A1
- DE 102013218976 A1
- DE 102013218981 A1
- US 3154597 A

- US 3170962 A
- DE 3412648
- EP 0157318 A
- DE 3728414 C1
- EP 0092701 A
- EP 1072660 A
- DE 102013218981
- DE 4415322

**In der Beschreibung aufgeführte Nicht-Patentliteratur**

- **WERNFRIED HEILEN**. Silicone resins and their combination. *Silicone combination resins/silicone resin hybrids*, 2015

- High Silicones and Silicone-Modified Materials strength Silicone-Urethane Copolymers. *Synthesis and Properties*, vol. 26, 395-407
- **W. NOLL**. Chemie und Technologie der Silicone. Wiley-VCH Verlag GmbH & Co. KGaA, 1960